# FASCICULE DE BREVET EUROPEEN

(11) **EP 3 023 649 B1**
(45) Date de publication et mention de la délivrance du brevet: **04.10.2017**
(21) Numéro de dépôt: 15195315.5
(22) Date de dépôt: 19.11.2015
(51) Int. Cl.: F16B 5/02, F16B 43/00, B62D 25/08

(54) **BAGUE ANTI-FLUAGE RENFORCÉE**
VERSTÄRKTER ANTIKRIECHRING
REINFORCED CREEP RING

(30) Priorité: 20.11.2014 FR 1461220
(43) Date de publication de la demande: 25.05.2016
(73) Titulaire: Renault S.A.S., 92100 Boulogne-Billancourt (FR)
(72) Inventeur: MULLER, BRUNO, 78150 LE CHESNAY (FR)

(56) Documents cités:
- WO-A1-2007/087991
- FR-A1- 2 973 457
- US-A- 3 768 845

## Description

### Domaine technique de l'invention

L'invention est du domaine des dispositifs d'assemblage d'un élément sur une partie de structure d'un véhicule et concerne plus particulièrement une bague anti-fluage renforcée, notamment destinée à une face avant technique d'un véhicule, en particulier selon le préambule de la revendication 1 (WO 2007/087991 A1). L'invention a pour objet aussi une face avant technique comportant une telle bague, un véhicule équipé d'une telle face avant technique, ainsi qu'un procédé d'assemblage d'une bague anti-fluage renforcée sur un support en matière plastique, telle une face avant technique.

### État de la technique

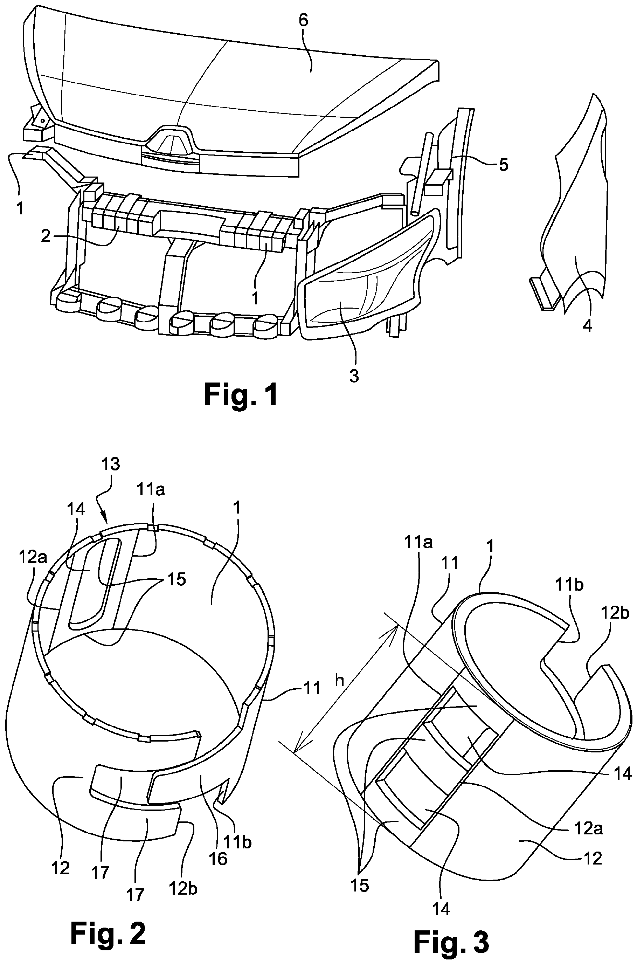

Certains véhicules automobiles comportent des faces avant techniques en matière plastique réalisées d'un seul tenant ou par assemblage de pièces distinctes. Une face avant technique fait partie intégrante d'une partie avant de la structure du véhicule comme cela est illustré par la vue en perspective de la figure 1. Une telle face avant technique est destinée à l'intégration d'éléments qui par exemple peuvent être du type d'un échangeur de chaleur (non représenté), d'un optique 2, d'un élément de sécurité, tel le pare-chocs avant (non représenté), d'un élément de carrosserie comme une aile avant latérale 3, ou un dispositif de verrouillage du capot moteur 4 (non représenté).

Cette intégration des éléments susmentionnés passe par une opération de fixation de chacun d'entre eux sur la face avant technique, via un serrage opéré par un dispositif de fixation approprié, par exemple un ensemble formé d'une vis et d'un écrou, dont l'effort de serrage tend à déformer la matière plastique constitutive de la face avant technique. Afin de pallier à cet inconvénient, il est d'usage d'utiliser une bague anti-fluage conformée selon le dispositif de fixation et qui est rapportée dans un orifice de réception réalisé dans la face avant technique.

Toutefois, selon la nature de l'équipement à fixer sur la face avant technique, l'effort de serrage est si important qu'une bague anti-fluage traditionnelle ne résiste pas aux efforts de compression, si bien que la bague subit un matage déformant la face avant technique. Compte tenu du fait que les jeux et affleurements assurent la qualité d'assemblage des éléments de carrosserie, il n'est pas permis de créer une telle déformation de la face avant technique.

Afin de pallier à cet inconvénient, le recours à une épaisseur augmentée de la bague tout en restant à iso-diamètre extérieur semble être une solution appropriée pour une tenue à la déformation de la bague lors d'un serrage d'intensité importante.

Cette solution engendre toutefois un inconvénient majeur qui, au regard de la rigidité augmentée de la bague, rend difficile sa mise en place dans l'orifice dédié de la face avant technique. En effet, compte tenu de l'épaisseur augmentée de la bague, cette dernière n'est plus apte à se déformer lorsqu'elle est soumise à un effort de compression radiale, de sorte qu'il devient difficile voire impossible à un opérateur sur une ligne de montage en grande série, de réaliser manuellement l'assemblage de la bague dans son orifice dédié de la face avant technique. En effet, du fait de la rigidité augmentée de la bague, l'insertion même partielle de la bague dans l'orifice devient impossible à réaliser de manière manuelle, à moins d'avoir recours à des dispositifs particuliers d'aide au montage qui sont couteux et complexe dans leur mise en oeuvre.

### Objet de l'invention

Le but de la présente invention est de proposer une bague anti-fluage renforcée qui remédie aux inconvénients listés ci-dessus, une telle bague étant destinée à une face avant technique d'un véhicule automobile pour recevoir un dispositif de fixation d'un élément sur la face avant technique.

Plus particulièrement l'objet de l'invention a trait à une bague qui comprend des coquilles respectivement de forme incurvée et délimitées par des bords longitudinaux et un moyen d'articulation formant une liaison mécanique déformable reliant l'une à l'autre les coquilles par l'un de leurs bords longitudinaux, l'autre de leurs bords longitudinaux étant mutuellement espacées de telle sorte que ledit moyen d'articulation est apte à permettre leur rapprochement simultané lorsque la bague est soumise à un effort de compression radial, ledit moyen d'articulation ayant une rigidité inférieure à celle d'au moins une coquille, la rigidité de la coquille étant adaptée à l'effort de compression axiale exercé par le dispositif de fixation, ledit moyen d'articulation étant réalisé par une réduction d'épaisseur.

Une telle conception de la bague permet sa déformation radiale par un opérateur sans altérer sa tenue à la compression axiale lors d'une opération de serrage d'un élément sur la face technique. Il devient possible d'utiliser une bague à épaisseur augmentée, qui présente une tenue à la compression axiale augmentée d'autant. Une telle conception de la bague améliore en outre substantiellement l'opération d'assemblage de la bague sur un support du type d'une face avant technique, puisque l'opérateur peut réaliser manuelle l'assemblage en exerçant un effort de compression radial afin de rapprocher les bords longitudinaux libres des coquilles constitutives de la bague, ce qui tend à réduire son diamètre extérieur pour son insertion dans un orifice dédié de la face avant technique. Ledit moyen d'articulation se comporte ainsi comme une charnière autour de laquelle chaque coquille est apte à pivoter.

L'objet de l'invention concerne aussi une bague anti-fluage renforcée ayant les caractéristiques additionnelles suivantes prises séparément ou en combinaison entre elles :
le ratio entre l'épaisseur des coquilles et l'épaisseur dudit moyen d'articulation est compris entre 2 et 4 ce qui confère aux coquilles une résistance à la déformation supérieure à celle dudit moyen d'articulation,
   - ledit moyen d'articulation comprend au moins une ouverture, chaque ouverture étant délimitée par au moins une bretelle de liaison des coquilles, de sorte que les bretelles de liaison viennent de matière avec les coquilles, ce qui facilite la réalisation de la bague. En outre, l'ouverture procure une réduction du poids de la bague, ce qui compense le recours à une épaisseur augmentée. De manière préférentielle, la dimension de l'ouverture est assujettie à l'épaisseur augmentée de sorte que le poids de la bague reste tout du moins identique à celle de la bague connue, voire inférieure à cette dernière.
   - l'ouverture est de forme oblongue d'orientation axiale, en ce sens que selon un axe longitudinal, la hauteur des bretelles est inférieure à celle de l'ouverture de sorte que les contraintes de déformation issues de la compression radiale convergent vers les bretelles tout en limitant les dispersions,
   - au moins une bretelle a une hauteur minimale d'au moins un tiers de la hauteur totale de la bague, de préférence la hauteur de chaque bretelle étant au minimum d'environ une fois et demie l'épaisseur de la bague de sorte que la déformation reste dans le domaine de l'élastique,
   - la bague comprend un moyen de guidage de bords longitudinaux libres des coquilles, ledit moyen de guidage étant réalisé par les bords longitudinaux espacés des coquilles de forme complémentaire, un tel écart tangentiel rendant apte la compression radiale de la bague sans nuire à la tenue à la déformation axiale,
   - la bague comprend des faces d'extrémité axiale de section ouverte formées des coquilles et de leurs bretelles de liaison, les faces d'extrémité étant de préférence de section sensiblement annulaire de sorte que le dispositif de fixation viennent en prise avec des faces d'extrémité axiale opposées présentant respectivement une surface annulaire, garantissant une répartition homogène de l'effort de serrage du dispositif de fixation sur l'intégralité de la bague.

L'invention concerne aussi un support du type d'une face avant technique de véhicule automobile comportant au moins un orifice dans lequel est logée une bague anti-fluage renforcée comportant au moins l'une quelconque des caractéristiques susmentionnées, le support étant réalisé en matière plastique, la bague étant réalisée en acier à partir d'un feuillard d'épaisseur comprise entre 0,5 et 2 mm. Le support peut être une face avant technique.

De préférence, la bague a une épaisseur de 1,5mm, ce qui lui permet de supporter, sans déformation, un couple de serrage qui est de l'ordre d'environ 8 Nm pour une bague de section oblongue et d'environ 21 Nm pour une bague de section cylindrique.

L'invention concerne aussi un véhicule du type d'une automobile comprenant un support tel que précédemment décrit, dans lequel le support est une face avant technique.

L'invention concerne également un procédé d'assemblage d'une bague anti-fluage renforcée susmentionnée dans un support du type d'une face avant technique de véhicule automobile, dans lequel la bague subit une compression radiale destinée à rapprocher les bords longitudinaux libres des coquilles par une déformation des bretelles de liaison des coquilles rendant apte la réduction la dimension de la bague vers une dimension inférieure à celle de l'orifice dédié du support pour son introduction partielle dans l'orifice, la compression de la bague étant ensuite libérée rendant alors apte l'introduction totale par emmanchement en force de la bague dans l'orifice jusqu'à ce que les faces d'extrémité axiale de la bague viennent à affleurement des extrémités axiales de l'orifice.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 2 est une vue en perspective d'une bague anti-fluage renforcée selon l'invention,
- la figure 3 est une vue en perspective d'une variante de réalisation de la bague de la figure 2,
- les figures 4 et 5 illustrent en perspective partielle, en vue avant, une face avant technique comportant respectivement la bague de la figure 3 et la bague avec un dispositif de fixation.

### Description de modes préférentiels de l'invention

La bague 1 anti-fluage pour une face avant technique 2 d'un véhicule automobile, objet de l'invention, qui va être décrit ci-après en référence aux figures 2 à 5, est une pièce destinée à la fixation permanente ou démontable, via par exemple un ensemble de verrouillage, d'au moins un élément à la face avant technique.

Comme représenté, un tel élément peut être une optique 3, ou une pièce de carrosserie comme une aile avant 4, ou une pièce de structure telle une doublure d'aile 5 ou une doublure de capot moteur 6.

Afin de rendre possible l'assemblage d'un élément sur la face avant technique, voire rendre possible l'assemblage de la face avant technique 2 sur des éléments de soubassement formant une partie avant de la structure du véhicule, la face avant technique comprend des orifices 7 réalisés par perçage ou par moulage de la face avant technique 2 réalisée en matière plastique. Le recours à un tel matériau permet d'alléger substantiellement le poids de la structure du véhicule, ce qui réduit substantiellement les rejets de CO2 du véhicule lors de ses déplacements.

Une bague 1 anti-fluage forme localement des points de rigidité augmentée de la face avant technique 2, sur lesquels peuvent être réalisées des fixations notamment par serrage. Il est d'usage d'utiliser des ensembles composés d'une vis et d'un écrou comme dispositif de fixation, l'écrou pouvant par exemple faire partie intégrante de l'élément à fixer à la face avant technique 1.

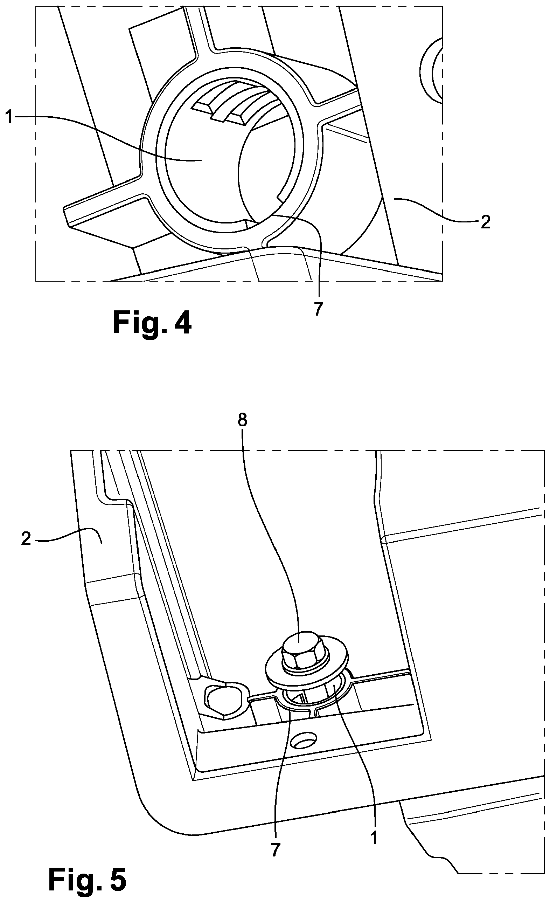

A titre d'exemple non limitatif des possibilités envisageables de fabrication de l'orifice 7 au travers duquel une partie du dispositif de fixation est destiné à s'étendre, l'orifice peut avoir une forme tubulaire comme cela est représenté sur les figures 4 et 5. Un tel orifice 7 est ici issu de moulage de la face avant technique 1 et s'étend en saillie hors de la face avant de la face avant technique 1. Afin d'augmenter sa tenue à la déformation, des nervures de rigidification relient la paroi extérieure de l'orifice 7 tube à des surfaces adjacentes de la face avant technique 1.

La paroi intérieure de l'orifice 7 est de forme complémentaire à celle de la bague 1 anti-fluage renforcée, en ce sens que la bague 1 disposée dans l'orifice 7 vient épouser la paroi intérieure.

Dans un mode de réalisation préférentielle de la bague 1 anti-fluage, cette dernière comprend des coquilles 11 et 12 de forme incurvée, par exemple de section en arc de cercle, de dimension assujettie à celle de l'orifice.

La bague 1 anti-fluage renforcée est de préférence de section transversale cylindrique ou oblongue.

Préférentiellement encore, la hauteur « h » de chaque coquille sensiblement égale à la profondeur de l'orifice 7, de sorte que les faces opposées d'extrémité axiale de la bague 1 viennent à affleurement des bords de l'orifice 7. De préférence, un léger repli de la bague 1 dans l'orifice 7, ce qui correspond à une hauteur des coquilles 11 et 12 légèrement inférieure à la profondeur de l'orifice, permet lors du serrage en force d'un dispositif 8 de fixation, une déformation localisée des extrémités des bords de l'orifice 7. Cela assure un blocage en rotation du dispositif 8 de fixation sur la face avant technique 2.

Chacune des coquilles 11 et 12 est délimitée par des bords longitudinaux 11a, 11b, 12a, 12b. Parmi les bords longitudinaux, par paire, certains des bords longitudinaux 11b, 12b sont libres et mutuellement espacés comme cela est rendu visible sur les figures 2 et 3, tandis que les autres bords longitudinaux 11a, 12a sont reliés l'un à l'autre par l'intermédiaire d'un moyen d'articulation 13 dont la fonction est d'assurer une liaison mécanique qui soit déformable dans le domaine élastique du matériau de sorte que la bague 1 puisse avoir la flexibilité requise pour permettre d'un côté une compression radiale des coquilles afin de les rapprocher l'une de l'autre, la bague 1 passant ainsi d'une position d'origine à une position déformée dans laquelle le diamètre extérieur de la bague est réduit par rapport à sa position d'origine, d'un autre côté de retrouver après déformation sa position d'origine lorsque l'effort de compression est annulé.

Compte tenu du fait que la bague 1 doit emmagasiner un effort de compression axial important, l'épaisseur des coquilles 11 et 12 est augmentée de sorte que la bague 1 est qualifiée de bague anti-fluage renforcée. Chaque coquille est de par son épaisseur et la nature de son matériau rendue de préférence indéformable à des couples de serrage de l'ordre de 4 Nm. Une telle rigidité augmentée permet d'atteindre des efforts nominaux de serrage du dispositif de fixation jusque-là jamais atteints, par exemple de l'ordre de 21 Nm +/-20%.

A titre d'exemples non limitatifs, chaque coquille est réalisée à partir d'un feuillard d'acier de type C45 ou C67 et d'épaisseur comprise entre 1 et 2 mm selon la valeur de l'effort de serrage, afin d'éviter tout risque de matage de la bague. A titre d'exemple, un mode de réalisation préférentielle consiste en une bague 1 dont chaque coquille est d'épaisseur de 1.5 mm afin de résister à un couple de serrage d'environ 40 Nm fournit par le dispositif de fixation.

Compte tenu de cette rigidité augmentée des coquilles, ledit moyen 13 d'articulation a une rigidité inférieure à celle des coquilles.

Ledit moyen 13 d'articulation est réalisé par une réduction d'épaisseur de sorte que la bague comprend une bande flexible (non représentée) s'étendant linéairement entre les bords longitudinaux 11a et 12a et longitudinalement entre les faces d'extrémité opposée axiale de la bague. A titre d'exemple non limitatif, l'épaisseur d'une telle bande flexible est de 0.5 mm, c'est-à-dire que le ratio entre l'épaisseur des coquilles et l'épaisseur de la bande flexible est compris entre 2 et 4.

Ledit moyen 13 d'articulation peut comprendre au moins une ouverture 14 ou lumière, selon le terme choisi, de telle sorte que chaque ouverture 14 est délimitée par au moins une bretelle 15 de liaison de l'un 11a des bords longitudinaux d'une coquille 11 à l'un 12a des bords longitudinaux de l'autre coquille 12.

Sur la figure 2, la bague 1 comprend une unique ouverture 14 délimitant deux bretelles 15 de liaison situées au niveau de chacune des extrémités axiales de la bague 1.

Le nombre de bretelles 15 est assujetti à l'épaisseur des coquilles 11 et 12 et à l'effort de compression radiale déterminé pour déformer par compression radiale la bague et rendre de la sorte possible son insertion dans l'orifice 7.

Préférentiellement, la hauteur de chaque bretelle 15 est définie selon l'épaisseur de la bague de sorte que la hauteur a minima d'une bretelle 15 correspond à une fois et demie l'épaisseur de la bague.

Selon la variante de réalisation de la figure 3, la bague 1 comprend un moyen d'articulation constitué de trois bretelles 15 espacées les unes des autres par une ouverture 14. La bague 1 ainsi illustrée est munie d'une série d'ouvertures 14, comprenant au moins deux ouvertures 14.

L'ouverture 14 est de préférence de forme oblongue d'orientation axiale avec des extrémités axiales sensiblement en arc de cercle.

Selon un mode de réalisation non représenté, la bague anti-fluage renforcée comprend une unique bretelle de liaison. Une telle bretelle peut avoir une hauteur minimale d'au moins un tiers de la hauteur totale de la bague. Une telle bretelle peut être située au niveau médian de la bague. L'épaisseur de la bretelle peut être identique à l'épaisseur d'une coquille.

La bague 1 anti-fluage de l'invention peut également comprendre un moyen de guidage radial de bords longitudinaux libres 11b, 12b des coquilles 11 et 12. Par conséquent, dans sa position d'origine, les bords longitudinaux libres 11b, 12b de la bague 1 sont mutuellement écartés l'un de l'autre, comme cela est illustré aux figures 2 et 3.

Les bords longitudinaux libres 11b et 12b peuvent avantageusement être réalisés de forme complémentaire. Le bord 11b longitudinal peut comprendre en partie médiane un doigt 16 de guidage s'étendant dans l'évidement 17 pouvant être ménagé sur le bord 12b lui faisant face. Dans la position d'origine de la bague 1, le doigt 16 s'étend partiellement dans l'évidement 17 selon un écart tangentiel prédéterminé. Sous l'effet d'un effort de compression radiale de la bague 1, les bords 11b et 12b se rapprochent de sorte que dans la position comprimée, le doigt 16 coulisse dans l'évidement 17, réduisant par la même l'écart tangentiel entre le doigt 16 et l'évidement 17. Une telle réduction rend apte le positionnement de la bague 1 dans l'orifice 7.

Du fait d'un tel écart tangentiel, la bague 1 anti-fluage comprend des faces d'extrémité axiale de section ouverte.

Afin d'augmenter la surface de contact entre la bague 1 anti-fluage et le dispositif 8 de fixation, dont un des éléments constitutifs peut être une vis 8 munie d'une rondelle, comme cela est illustré sur la figure 5, la face d'extrémité axiale de la bague comprend les coquilles 11 et 12 ainsi que des bretelles 15 de liaison des coquilles.

La bague précédemment décrite trouve une utilisation dans une face avant technique 2 d'un véhicule. Il peut être envisagé de réduire encore la masse totale de la face avant technique car chaque point de fixation formé d'une bague 1 reçue dans un orifice 7 permet une tenue améliorée au matage lors d'un serrage avec un couple d'intensité élevée.

La face avant technique 2 étant réalisée en matière plastique contribue à une réduction de la masse à vide du véhicule, tandis que la bague 1 réalisée en acier à partir d'un feuillard d'acier d'épaisseur comprise entre 1 et 2 mm assure une tenue augmentée au couple de serrage.

Selon l'invention, le procédé d'assemblage est remarquable en ce sens qu'il permet d'atteindre une facilité de montage jamais égalée. Par l'utilisation d'une telle bague 1, lorsque le montage est assuré par un opérateur, ce dernier peut réaliser manuellement le montage d'une bague 1 renforcée sans le moindre problème, tout du moins avec peu d'efforts.

En effet, selon une première étape, la bague 1 subit une compression radiale selon un effort de faible intensité afin de rapprocher les bords longitudinaux libres des coquilles. Une telle compression génère une déformation des bretelles 15 de liaison des coquilles 11 et 12 qui se traduit par une réduction de la dimension extérieure de la bague vers une dimension inférieure à celle de l'orifice 7.

La bague 1 ainsi comprimée est ensuite introduite à coulissement dans l'orifice 7 jusqu'à ce que la préhension de la bague ne puisse plus être effective.

Dès lors, la compression la bague 2 est libérée de sorte que la bague retrouve sa position d'origine et que sa paroi extérieure épouse le contour intérieur de l'orifice 7.

La dernière étape d'assemblage consiste en l'introduction totale de la bague 1 dans l'orifice 7 par emmanchement en force, de telle sorte que les faces d'extrémité axiale de la bague viennent à affleurement des extrémités axiales de l'orifice, au jeu près des tolérances de fabrication.

La face avant technique 2 ainsi équipée d'au moins une bague 1 renforcée est susceptible de recevoir des éléments nécessitant des couples de serrage important, sans risque de matage ou de flambage de l'une quelconque des pièces constitutives de l'ensemble ainsi réalisé.

L'utilisation de la bague 1 dans une face avant technique 2 est un exemple de réalisation parmi tant d'autres qui rend possible un serrage à couple important, de l'ordre d'au moins 21 Nm +/-20%, d'un élément sur un support plastique, l'élément pouvant être une optique, une aile ou une pièce de structure.

Le support qui est destiné à recevoir la bague 1 anti fluage est une face avant technique destinée à être montée en amont de la structure d'un véhicule, notamment au prolongement des longerons avant du véhicule.

Un tel support peut être réalisé en matière composite afin d'en augmenter sa tenue à la déformation.

L'invention concerne aussi un véhicule automobile comprenant une face avant technique 2 avec au moins une bague 1 anti-fluage renforcée, telle qu'elle a été précédemment décrite.

## Revendications

1. Bague (1) anti-fluage renforcée pour une face avant technique (2) d'un véhicule, la bague étant destinée à recevoir un dispositif (8) de fixation d'un élément sur la face avant technique et comprend des coquilles (11, 12) respectivement de forme incurvée et délimitées par des bords longitudinaux (11a, 11b, 12a, 12b) et un moyen d'articulation (13) formant une liaison mécanique déformable reliant l'une à l'autre les coquilles par l'un de leurs bords longitudinaux, l'autre de leurs bords longitudinaux étant mutuellement espacées de telle sorte que ledit moyen d'articulation (13) est apte à permettre leur rapprochement simultané lorsque la bague est soumise à un effort de compression radial, **caractérisée en ce que** ledit moyen d'articulation (13) a une rigidité inférieure à celle d'au moins une coquille (11, 12), la rigidité de la coquille étant adaptée à l'effort de compression axiale exercé par le dispositif (8) de fixation, ledit moyen d'articulation (13) étant réalisé par une réduction d'épaisseur.

2. Bague (1) selon la revendication 1, **caractérisée en ce que** le ratio entre l'épaisseur des coquilles (11, 12) et l'épaisseur dudit moyen d'articulation est compris entre 2 et 4.

3. Bague (1) selon la revendication 1 ou 2, **caractérisée en ce que** ledit moyen d'articulation (13) comprend au moins une ouverture (14), chaque ouverture étant délimitée par au moins une bretelle (15) de liaison des coquilles (11, 12).

4. Bague (1) selon la revendication 3, **caractérisée en ce que** l'ouverture (14) est de forme oblongue d'orientation axiale.

5. Bague (1) selon la revendication 3 ou 4, **caractérisée en ce qu'**au moins une bretelle (15) a une hauteur minimale d'au moins un tiers de la hauteur totale de la bague.

6. Bague (1) selon l'une quelconque des revendications 1 à 5, **caractérisée en ce que** la bague comprend un moyen de guidage (16, 17) de bords longitudinaux libres des coquilles, ledit moyen de guidage étant réalisé par les bords longitudinaux (11b, 12b) espacés des coquilles de forme complémentaire.

7. Bague (1) selon l'une quelconque des revendications 3 à 6, **caractérisée en ce qu'**elle comprend des faces d'extrémité axiale de section ouverte formées des coquilles (11, 12) et de leurs bretelles (15) de liaison.

8. Support du type d'une face avant technique de véhicule automobile comportant au moins un orifice dans lequel est logée une bague (1) anti-fluage renforcée conforme à l'une quelconque des revendications précédentes, le support étant réalisé en matière plastique, la bague étant réalisée en acier à partir d'un feuillard d'épaisseur comprise entre 0,5 et 2 mm.

9. Véhicule du type d'une automobile comprenant un support selon la revendication 8, dans lequel le support est une face avant technique (2).

10. Procédé d'assemblage d'une bague (1) anti-fluage renforcée conforme l'une quelconque des revendications 3 à 7 dans un support du type d'une face avant technique de véhicule automobile selon la revendication 8, dans lequel la bague subit une compression radiale destinée à rapprocher les bords longitudinaux libres des coquilles (11, 12) par une déformation des bretelles (15) de liaison des coquilles rendant apte la réduction la dimension de la bague vers une dimension inférieure à celle de l'orifice (7) dédié du support pour son introduction partielle dans l'orifice, la compression de la bague étant ensuite libérée rendant alors apte l'introduction totale par emmanchement en force de la bague dans l'orifice jusqu'à ce que les faces d'extrémité axiale de la bague viennent à affleurement des extrémités axiales de l'orifice.

## Patentansprüche

1. Verstärkter Antikriechring (1) für eine technische Vorderseite (2) eines Fahrzeugs, wobei der Ring dazu bestimmt ist, eine Vorrichtung (8) zur Befestigung eines Elements auf seiner technischen Vorderseite aufzunehmen, und Schalen (11, 12) von jeweils gekrümmter Form, die von Längsrändern (11a, 11b, 12a, 12b) begrenzt sind, und ein Gelenkmittel (13) umfasst, das eine verformbare mechanische Verbindung bildet, die die Schalen mit einem ihrer Längsränder miteinander verbindet, wobei der andere ihrer Längsränder wechselseitig beabstandet ist, so dass das Gelenkmittel (13) geeignet ist, ihre gleichzeitige Annäherung zu ermöglichen, wenn der Ring einer radialen Kompressionskraft ausgesetzt ist, **dadurch gekennzeichnet, dass** das Gelenkmittel (13) eine geringere Steifigkeit als jene mindestens einer Schale (11, 12) hat, wobei die Steifigkeit der Schale an die axiale Kompressionskraft angepasst ist, die von der Befestigungsvorrichtung (8) ausgeübt wird, wobei das Gelenkmittel (13) durch eine Dickenverminderung verwirklicht ist.

2. Ring (1) nach Anspruch 1, **dadurch gekennzeichnet, dass** das Verhältnis zwischen der Dicke der Schalen (11, 12) und der Dicke des Gelenkmittels zwischen 2 und 4 beträgt.

3. Ring (1) nach Anspruch 1 oder 2, **dadurch gekennzeichnet, dass** das Gelenkmittel (13) mindestens eine Öffnung (14) umfasst, wobei jede Öffnung durch mindestens einen Gurt (15) zur Verbindung der Schalen (11, 12) begrenzt ist.

4. Ring (1) nach Anspruch 3, **dadurch gekennzeichnet, dass** die Öffnung (14) von länglicher Form mit axialer Ausrichtung ist.

5. Ring (1) nach Anspruch 3 oder 4, **dadurch gekennzeichnet, dass** mindestens ein Gurt (15) eine Mindesthöhe von mindestens einem Drittel der Gesamthöhe des Ringes hat.

6. Ring (1) nach einem der Ansprüche 1 bis 5, **dadurch gekennzeichnet, dass** der Ring ein Mittel (16, 17) zur Führung der freien Längsränder der Schalen umfasst, wobei das Führungsmittel durch die beabstandeten Längsränder (11b, 12b) der Schalen von komplementärer Form verwirklicht ist.

7. Ring (1) nach einem der Ansprüche 3 bis 6, **dadurch gekennzeichnet, dass** er axiale Endflächen mit offenem Querschnitt umfasst, die von den Schalen (11, 12) und ihren Verbindungsgurten (15) gebildet sind.

8. Träger vom Typ einer technischen Vorderseite eines Kraftfahrzeugs, umfassend mindestens eine Öffnung, in der ein verstärkter Antikriechring (1) nach einem der vorhergehenden Ansprüche angeordnet ist, wobei der Träger aus Kunststoff hergestellt ist, wobei der Ring aus Stahl aus einem Band mit einer Dicke zwischen 0,5 und 2 mm hergestellt ist.

9. Fahrzeug vom Typ Kraftfahrzeug, umfassend einen Träger nach Anspruch 8, wobei der Träger eine technische Vorderseite (2) ist.

10. Verfahren zum Zusammenbau eines verstärkten Antikriechringes (1) nach einem der Ansprüche 3 bis 7 in einem Träger vom Typ einer technischen Vorderseite eines Kraftfahrzeugs nach Anspruch 8, bei dem der Ring einer radialen Kompression unterzogen wird, die dazu bestimmt ist, die freien Längsränder der Schalen (11, 12) durch eine Verformung der Verbindungsgurte (15) der Schalen, die die Verminderung der Dimension des Ringes zu einer Dimension kleiner als jene der speziellen Öffnung (7) des Trägers zu seiner teilweisen Einführung in die Öffnung möglich macht, anzunähern, wobei die Kompression des sodann freigegebenen Ringes die vollständige Einführung des Ringes in die Öffnung durch festes Einstecken, bis die axialen Endflächen des Ringes an den axialen Enden der Öffnung anliegen, möglich macht.

## Claims

1. Reinforced anti-creep ring (1) for a front end module (2) of a vehicle, the ring being intended to receive a device (8) for fastening an element to the front end module and comprises shells (11, 12) respectively of curved shape and delimited by longitudinal edges (11a, 11b, 12a, 12b), and an articulation means (13) forming a deformable mechanical connection connecting the shells to one another by one of their longitudinal edges, the other of their longitudinal edges being mutually spaced such that said articulation means (13) is able to allow them to be simultaneously brought towards one another when the ring is subjected to a radial compressive force, **characterized in that** said articulation means (13) has a stiffness which is less than that of at least one shell (11, 12), the stiffness of the shell being adapted to the axial compressive force exerted by the fastening device (8), said articulation means (13) being produced by a reduction in thickness.

2. Ring (1) according to Claim 1, **characterized in that** the ratio between the thickness of the shells (11, 12) and the thickness of said articulation means is between 2 and 4.

3. Ring (1) according to Claim 1 or 2, **characterized in that** said articulation means (13) comprises at least one opening (14), each opening being delimited by at least one strap (15) for connecting the shells (11, 12).

4. Ring (1) according to Claim 3, **characterized in that** the opening (14) is of oblong shape of axial orientation.

5. Ring (1) according to Claim 3 or 4, **characterized in that** at least one strap (15) has a minimum height of at least one third of the total height of the ring.

6. Ring (1) according to any one of Claims 1 to 5, **characterized in that** the ring comprises a means (16, 17) for guiding free longitudinal edges of the shells, said guide means being produced by the spaced longitudinal edges (11b, 12b) of the shells of complementary shape.

7. Ring (1) according to any one of Claims 3 to 6, **characterized in that** it comprises axial end faces of open cross section formed by the shells (11, 12) and by their connecting straps (15).

8. Support of the motor vehicle front end module type comprising at least one orifice in which there is housed a reinforced anti-creep ring (1) according to any one of the preceding claims, the support being made of plastic, the ring being made of steel from a strip with a thickness between 0.5 and 2 mm.

9. Vehicle of the automobile type comprising a support according to Claim 8, in which the support is a front end module (2).

10. Method for assembling a reinforced anti-creep ring (1) according to any one of Claims 3 to 7 in a support of the motor vehicle front end module type according to Claim 8, in which the ring is subjected to a radial compression intended to bring the free longitudinal edges of the shells (11, 12) towards one another by a deformation of the straps (15) for connecting the shells, enabling the dimension of the ring to be reduced towards a dimension which is less than that of the dedicated orifice (7) in the support so that it can be partially inserted into the orifice, the compression of the ring subsequently being released then enabling the ring to be completely inserted by force fitting into the orifice until the axial end faces of the ring are flush with the axial ends of the orifice.
